# EUROPÄISCHE PATENTSCHRIFT

(11) **EP 3 390 869 B1**
(45) Veröffentlichungstag und Bekanntmachung des Hinweises auf die Patenterteilung: **15.05.2019**
(21) Anmeldenummer: 17727140.0
(22) Anmeldetag: 22.05.2017
(51) Int. Cl.: F16J 9/20

(54) **KOMPRESSIONS-ÖLABSTREIF-KOLBENRING**
COMPRESSION OIL CONTROL PISTON RING
SEGMENT DE PISTON RACLEUR D'HUILE DE COMPRESSION

(30) Priorität: 01.06.2016 DE 102016110105
(43) Veröffentlichungstag der Anmeldung: 24.10.2018
(73) Patentinhaber: Federal-Mogul Burscheid GmbH, 51399 Burscheid (DE)
(72) Erfinder: MITTLER, Richard, 51399 Burscheid (DE); RUCH, Fabian, 51375 Leverkusen (DE)
(74) Vertreter: Becker Kurig Straus
(86) Internationale Anmeldenummer: PCT/EP2017/062263
(87) Internationale Veröffentlichungsnummer: WO 2017/207323

(56) Entgegenhaltungen:
- DE-A1- 3 511 851
- DE-A1-102009 036 240
- US-A- 1 894 672
- US-A1- 2015 267 813

## Beschreibung

### Gebiet der Erfindung

Die Erfindung betrifft einen Kolbenring, insbesondere einen Kompressionskolbenring mit Ölabstreifwirkung.

### Stand der Technik

In Viertaktmotoren besteht eines der Hauptprobleme in der Kontrolle und der Abdichtung des Kolbenring-Kolben-Systems von und mit Kurbelgehäuseöl. Hierzu werden Kolbenringe eingesetzt, welche den Brennraum möglichst gut von dem im Kurbelgehäuse befindlichen Öl abdichten sollen, sogenannte Ölringe oder Ölabstreifringe, und Kompressionsringe, welche den Brennraum möglichst gut, abdichten sollen, um Leckgasmengen, die auch als Blow-By-Gase bezeichnet werden, zu vermeiden. Typischerweise werden brennraumseitig zwei Kompressionsringe und kurbelraumseitig ein Ölabstreifring eingesetzt. In jüngster Zeit wird verstärkt vom zweiten Kompressionsring, also dem mittleren Ring, eine Art Doppelrolle erwartet, der Ring soll auf der einen Seite eine Kompressionsfunktion erfüllen und auf der anderen Seite eine Ölabstreiffunktion.

Üblicherweise werden als zweiter Kompressionsring Minutenringe oder Nasenringe eingesetzt, die eine möglichst scharfe untere Laufkante zum Abstreifen von Öl aufweisen. Der Nachteil dieser Ringe ist bei hochaufgeladenen Motoren, dass aufgrund des hohen Druckes auf der Lauffläche eine Instabilität entstehen kann, die zu einer radialen Abhebung von der Zylinderwand führt. Die Abstreiffunktion von der Zylinderwand kann nur durch große Ölmengen die vom Kolben in Richtung Zylinderwand zurückgeschleudert werden erfüllt werden. Dabei ist zu beachten, dass diese Mengen dem Ölring zugeführt werden sollen, dieser aber aufgrund von kleinen Stegen nicht fähig ist diese Ölmengen in Richtung Kurbelgehäuse zu transportieren.

Es besteht Bedarf an einem Kompressionskolbenring der über ein hinreichendes Ölabstreifvermögen verfügt und bei dem gleichzeitig ein radiales Abheben von der Zylinderwand vermieden wird.

US 2015/0267813 A1 offenbart einen Kolbenring gemäß dem Oberbegriff des Anspruchs 1.

### Zusammenfassung der Erfindung

Dieses Problem wird gelöst durch einen erfindungsgemäßen Kolbenring dessen außenliegende Lauffläche in Bereiche aufgeteilt ist, die sich in Umlaufrichtung umlaufend über unterschiedliche axiale Höhenbereiche der Lauffläche erstrecken, einen brennraumseitigen oberen Laufflächenbereich, einen kurbelraumseitigen unteren Laufflächenbereich und einen mittleren Laufflächenbereich, zwischen dem oberen und dem unteren Laufflächenbereich. Die Grenzlinie zwischen oberem und mittlerem Laufflächenbereich bildet eine Abstreiflinie, die Grenzlinie zwischen mittlerem und unterem Laufflächenbereich bildet eine Scheitellinie, wobei die Abstreiflinie radial weiter außen verläuft als die Scheitellinie. Der obere und der untere Laufflächenbereich sind in einer axialen Querschnittsansicht konvex nach außen gekrümmt. Der mittlere Laufflächenbereich weist in Umlaufrichtung abwechselnd konvexe Abschnitte, die in einer axialen Querschnittsansicht konvex nach außen gekrümmt sind, und konkave Abschnitte, die in einer axialen Querschnittsansicht zumindest teilweise konkav nach innen gekrümmt sind, auf.

Gemäß einem Aspekt der vorliegenden Erfindung kann die Scheitellinie radial weiter außen liegen als ein mindestens ein radial weitest innenliegender Punkt der konkaven Abschnitte.

Gemäß einem weiteren Aspekt ist der radiale Abstand zwischen der Abstreiflinie und dem mindestens einen radial weitest innenliegenden Punkt der konkaven Abschnitte kleiner als das 5-Fache des radialen Abstands zwischen Abstreiflinie und Scheitellinie.

Gemäß einem weiteren Aspekt ist die Lauffläche in jeder axialen Querschnittsansicht glatt, ohne Kanten, ausgebildet ist.

Gemäß einem weiteren Aspekt gehen die konkaven Abschnitte und die konvexen Abschnitte des mittleren Laufflächenbereichs glatt, ohne Kanten zu bilden, ineinander über.

Gemäß einem weiteren Aspekt weist der mittlere Laufflächenbereich in Umlaufrichtung 3 - 30, bevorzugt 8 - 24, weiter bevorzugt 12 - 18, konkave Abschnitte auf.

Gemäß einem weiteren Aspekt erstreckt sich jeder der konvexen Abschnitte in Umlaufrichtung über einen Winkel von mindestens 5°.

Gemäß einem weiteren Aspekt weisen die an den Ringstoß angrenzenden Enden der Lauffläche einen konvexen Abschnitt auf.

Gemäß einem weiteren Aspekt weisen die Abstreiflinie und die Scheitellinie einen in Umlaufrichtung im Wesentlichen konstanten Abstand von einer Kolbenringflanke auf.

Gemäß einem weiteren Aspekt ist der Abstand in radialer Richtung zwischen Abstreiflinie und Scheitellinie in Umlaufrichtung im Wesentlichen konstant.

Gemäß einem weiteren Aspekt verläuft die Abstreiflinie gemessen von der kurbelraumseitigen Flanke in einer axialen Höhe von 45-70%, bevorzugt 50-60%, der axialen Gesamthöhe des Kolbenrings.

Gemäß einem weiteren Aspekt bildet die Lauffläche eine geschlossene Fläche, wobei keine Öffnungen, die durch den Kolbenring hindurch zur Kolbenringinnenseite verlaufen, vorgesehen sind.

Hier wird der üblichen Bezeichnungsweise gefolgt, dass sich der Begriff axial auf die entsprechende Richtung des Kolbens bezieht, also die Richtung der Hin- und Herbewegung desselben, bzw. auf die entsprechende Achse des Kolben-Zylinders. Die Ringachse ist die durch den Mittelpunkt des Ringes in axiale Richtung verlaufende Achse, die im eingebauten Zustand mit der Mittelachse des Kolbens zusammenfällt. Eine radiale Richtung ist entsprechend eine Richtung die, parallel zur Ringebene, auf die Ringachse zu oder von dieser weg verläuft. Ein axialer Querschnitt bezeichnet einen Querschnitt, bei dem die Ringachse in der Schnittebene liegt.

### Kurze Beschreibung der Zeichnung

Im Folgenden werden beispielhafte Ausführungsformen der Erfindung unter Bezug auf die Figuren genauer beschrieben, wobei
Figur 1 axiale Querschnittsansichten des Kolbenrings zeigt; und
Figur 2 eine Draufsicht und eine zugehörige teilweise Abwicklung des Kolbenrings zeigt.

### Ausführliche Beschreibung der Erfindung

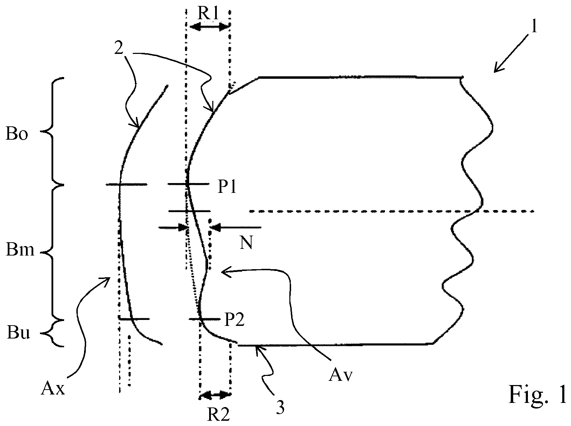

In Fig. 1 ist eine axiale Querschnittsansicht einer Ausführungsform des erfindungsgemäßen Kolbenrings 1 dargestellt. Die Kontur der Lauffläche 2 ist in der Figur zweimal gezeichnet, wobei sich die links und die rechts gezeigte Kontur in ihrer Form unterscheiden und zu verschiedenen Abschnitten in Umlaufrichtung gehören. Die Lauffläche 2 des Kolbenrings 1 ist in ihrer axialen Höhe in drei Bereiche unterteilt, einem oberen Laufflächenbereich Bo, einem mittleren Laufflächenbereich Bm und einem unteren Laufflächenbereich Bu. Oben bezieht sich hierbei auf die in Richtung Brennraum gelegene Seite des Rings 1, unten entsprechend auf die in Richtung Kurbelgehäuse gelegene Seite.

Die Linien an denen Laufflächenbereiche Bo, Bm, Bu aneinandergrenzen bilden eine oben gelegene, brennraumseitige, Abstreiflinie P1 und eine unten gelegene, kurbelraumseitige, Scheitellinie P2. Die Scheitellinie P2 ist von der Abstreiflinie P1 radial nach innen beabstandet, d.h. der in der Figur dargestellte Abstand R2 der Scheitellinie P2 zu einer Referenzlinie ist kleiner als der Abstand R1 der Abstreiflinie P1 zu selbiger Referenzlinie. Bevorzugt verläuft die Scheitellinie P2 in Umlaufrichtung in einem im Wesentlichen konstanten radialen Abstand R1-R2 von der Abstreiflinie P1. Die Abstreiflinie P1 ist die radial weitest außen gelegene Bereich des Kolbenrings 1, in der axialen Querschnittsansicht wird hier ein Pivotpunkt gebildet. An der Abstreiflinie P1, beziehungsweise in einem schmalen Bereich um die Abstreiflinie P1 herum, wird der Kolbenring 1 im eingebauten Zustand an der Zylinderwand anliegen und bei einer Abwärtsbewegung des Kolbens Öl von der Zylinderwand nach unten abstreifen.

Dadurch, dass der Kolbenring 1 weiter oben an der Zylinderwand anliegt als bei einem üblicherweise als mittleren Kolbenring eingesetzten Minuten- oder Nasenring, steht Brennraumgasen ein relativ, z.B. zu einem Minutenring, kleinerer Bereich, d.h. kleinere Fläche, zwischen Zylinderwand und Kolbenring zur Verfügung, in den sie eindringen können und den Kolbenring von der Zylinderwand wegdrücken können. Entsprechend tritt eine relativ kleinere, von dem Gasdruck verursachte, nach innen wirkende Kraft auf, die den Kolbenring von der Zylinderwand wegdrückt, die Wahrscheinlichkeit einer radialen Abhebung von der Zylinderwand wird also verringert und die Abdichtfunktion des Rings verbessert.

Der obere Laufflächenbereich Bo und der untere Laufflächenbereich Bu weisen in der axialen Querschnittsansicht eine in Umlaufrichtung gleichbleibende konvexe Krümmung nach außen auf. Konvex nach außen gekrümmt soll hier so zu verstehen sein, dass für jeden Punkt des Bereichs ein Kreis eingezeichnet werden kann, der durch den Punkt verläuft und dessen Krümmung derjenigen der Lauffläche in dem Punkt in der axialen Querschnittsansicht gleicht und der in einer Umgebung des Punktes im Wesentlichen mit der axialen Querschnittsansicht der Lauffläche übereinstimmt, wobei der Mittelpunkt des Kreises von der Lauffläche aus gesehen in Richtung der Innenseite des Rings liegt, also in Richtung der Ringachse, bzw. bei entsprechend kleiner Krümmung auch jenseits der Ringachse. Konkav nach innen gekrümmt heißt analog, dass der Mittelpunkt des Kreises nach außen gelegen ist.

Der mittlere Laufflächenbereich Bm weist in Umlaufrichtung zweierlei Abschnitte auf, die einander abwechseln, konvexe Abschnitte Ax und konkave Abschnitte Av. In den konvexen Abschnitten Ax ist die Lauffläche 2 in einer axialen Querschnittsansicht konvex nach außen gekrümmt, dies betrifft die ganze axiale Höhe des mittleren Bereichs Bm. Da die Übergänge zwischen den Laufflächenbereichen Bo, Bm, Bu bevorzugt glatt verlaufen, heißt dies, dass die Lauffläche 2 in den konvexen Abschnitten Ax in einer Querschnittsansicht in ihrer gesamten axialen Höhe konvex nach außen gekrümmt ist, also ballig ausgebildet ist. Glatt heißt, dass keine Kanten, in einer Querschnittsansicht keine Ecken, gebildet sind, die Kurve kann also durch eine differenzierbare Funktion beschrieben werden.

In den konkaven Abschnitten Av ist die Lauffläche 2 in einer axialen Querschnittsansicht zumindest teilweise konkav nach innen gekrümmt. Relativ zu der konvex ballig ausgebildeten Laufläche in den konvexen Abschnitten Ax treten dadurch Vertiefungen nach innen auf. Das Profil des Kolbenrings ist also in diesen Abschnitten etwas zurückgenommen, es sind Profilrücknahmen gebildet. Im Allgemeinen wird in den konkaven Abschnitten Av die Lauffläche nur teilweise konkav nach innen gekrümmt sein, um einen glatten Übergang ohne Kanten zwischen den Laufflächenbereichen Bo, Bm, Bu zu ermöglichen.

Der radial am weitesten innen gelegene Punkt der jeweiligen konkaven Abschnitte Av, also sozusagen der tiefste Punkt der Vertiefungen, ist dabei bevorzugt radial weiter innen gelegen als die Scheitellinie P2. Andererseits sollte der radiale Abstand N dieses mindestens einen weitest innen gelegenen Punktes zu der Abstreiflinie P1 das Fünffache des radialen Abstands R1-R2 von Abstreiflinie P1 und Scheitellinie P2 nicht überschreiten. Durch diesen radialen Abstand N und die Anzahl der konvexen Abschnitte Ax wird ein Volumen beschrieben, in das bei einer Abwärtsbewegung des Kolbens Öl aufgenommen werden kann.

Die Gestaltung der Lauffläche 2 des Kolbenrings 1 mit einander auf dem Umfang abwechselnden konvexen und konkaven Abschnitten Ax, Av des mittleren Laufflächenbereichs Bm führt zu einer hydrodynamischen Druckdifferenz im Öl und damit zu einer Verteilung des Öls in Umfangrichtung. Das Volumen, das durch die Profilrücknahmen in den konkaven Abschnitten Av bereitgestellt wird, kann gleichzeitig Öl aufnehmen, so dass bei einer Abwärtsbewegung des Kolbens das an der Zylinderwand befindliche Öl nicht einfach "überfahren" wird, was möglicherweise geschehen könnte, da die mit der Zylinderwand in Kontakt stehende Abstreiflinie P1, relativ, z.B. zu einem Minutenring, weit oben angeordnet ist, und also ein relativ großer Bereich zu Verfügung steht, in den Öl eindringen kann und den Ring von der Zylinderwand wegdrückt.

Bevorzugt ist die Lauffläche in jeder axialen Querschnittsansicht glatt ohne Kanten ausgebildet, also "tangentenstetig", ausgebildet. Weiter bevorzugt ist die Lauffläche auch in Umlaufrichtung glatt ohne Kanten gebildet; insbesondere gehen also die konkaven Abschnitte Av und die konvexen Abschnitte Ax glatt, ohne Kanten zu bilden, ineinander über. Sollte beides zutreffen, bildet also die Lauffläche, etwas mathematischer ausgedrückt, eine differenzierbare Funktion, z.B. in Zylinderkoordinaten.

In der Fig. 1 ist die Abstreiflinie P1 leicht oberhalb der Mitte der axialen Höhe des Kolbenrings 1 angeordnet. Bevorzugt ist die Abstreiflinie P1 in der Nähe der Mitte oder oberhalb der Mitte angeordnet. Genauer beträgt der axiale Abstand zur unteren Ringflanke 3 bevorzugt 45 - 70%, weiter bevorzugt 50 - 60%, der axialen Gesamthöhe des Kolbenrings.

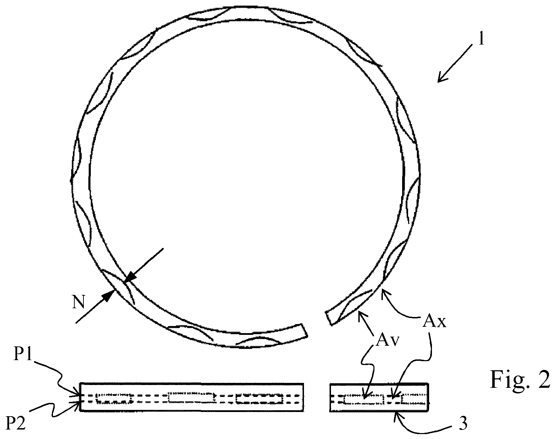

Fig. 2 stellt eine Draufsicht (oben) und eine zugehörige teilweise Abwicklung (unten) einer beispielhaften Ausführungsform des erfindungsgemäßen Kolbenrings 1 dar. Das oben zu Fig. 1 Ausgeführte trifft auch hier zu. In der Draufsicht sind die einander in Umlaufrichtung abwechselnden konkaven Abschnitte Av und konvexen Abschnitte Ax erkennbar. Weiter ist der radiale Abstand N des mindestens einen weitest innenliegenden Punktes zu der Abstreiflinie P1, die am weitesten außen liegt, dargestellt. Die Vertiefungen sind übertrieben tief gezeichnet, um erkennbar zu bleiben, aus diesem Grund sind die Vertiefungen auch nicht gestrichelt gezeichnet, auch wenn sie in der Draufsicht von oben nicht sichtbar sind.

In der beispielhaften Figur sind 14 konkave Abschnitte Av eingezeichnet. Bevorzugt weist die Lauffläche in Umlaufrichtung 3 - 30, bevorzugt 8 - 24, weiter bevorzugt 12 - 18, konkave Abschnitte Av auf. Weiter endet die Lauffläche am Ringstoß bevorzugt auf beiden Seiten mit einem konvexen Abschnitt Ax, dadurch wird vermieden, dass Öl in Richtung Ringstoß gedrückt wird. Auch überdeckt jeder der konvexen Abschnitte vorzugsweise einen Winkelbereich von mindestens 5° in Umlaufrichtung. Die Lauffläche ist also ballig ausgestaltet, mit Profilrücknahmen, die einen hydrodynamischen Druck zur Verteilung des Öls erzeugen und Volumen zur Aufnahme des Öls bereitstellen.

Die teilweise Abwicklung zeigt (gestrichelt gezeichnet) weiter die Abstreiflinie P1 und die Scheitellinie P2. Die Scheitellinie P2 kommt, auch wenn hier durchgehend eingezeichnet, nur an den konkaven Abschnitten Av zum Tragen, wo in der axialen Querschnittsansicht der Fig. 1 ein zweiter Pivotpunkt gebildet wird. In der gezeigten bevorzugten Ausführungsform ist der axiale Abstand der Abstreiflinie P1 und der Scheitellinie P2 zu der unteren Kolbenringflanke 3 in Umlaufrichtung im Wesentlichen konstant. Weiter sind keine Öffnungen vorhanden, die durch den Kolbenringkörper hindurch zur Innenseite des Kolbenrings verlaufen.

## Patentansprüche

1. Kolbenring (1), wobei die außenliegende Lauffläche (2) in Bereiche aufgeteilt ist, die sich in Umlaufrichtung umlaufend über unterschiedliche axiale Höhenbereiche der Lauffläche (2) erstrecken, und zwar
einen brennraumseitigen oberen Laufflächenbereich (Bo),
einen kurbelraumseitigen unteren Laufflächenbereich (Bu) und
einen mittleren Laufflächenbereich (Bm), zwischen dem oberen und dem unteren Laufflächenbereich (Bo, Bu);
wobei die Grenzlinie zwischen oberem und mittlerem Laufflächenbereich (Bo, Bm) eine Abstreiflinie (P1) bildet,
wobei die Grenzlinie zwischen mittlerem und unterem Laufflächenbereich (Bm, Bu) eine Scheitellinie (P2) bildet;
wobei der obere und der untere Laufflächenbereich (Bo, Bu) in einer axialen Querschnittsansicht über ihre ganze axiale Höhe konvex nach außen gekrümmt sind;
**dadurch gekennzeichnet, dass** die Abstreiflinie (P1) radial weiter außen als die Scheitellinie (P2) verläuft, und dass der mittlere Laufflächenbereich (Bm) in Umlaufrichtung abwechselnd konvexe Abschnitte (Ax), die in einer axialen Querschnittsansicht konvex nach außen gekrümmt sind, und konkave Abschnitte (Av), die in einer axialen Querschnittsansicht zumindest teilweise konkav nach innen gekrümmt sind, aufweist.

2. Kolbenring (1) gemäß Anspruch 1, wobei die Scheitellinie (P2) radial weiter außen liegt als mindestens ein radial weitest innenliegender Punkt der konkaven Abschnitte (Av).

3. Kolbenring (1) gemäß einem der vorstehenden Ansprüche, wobei der radiale Abstand (N) zwischen der Abstreiflinie (P1) und dem mindestens einen radial weitest innenliegenden Punkt der konkaven Abschnitte (Av) kleiner ist als das 5-Fache des radialen Abstands zwischen Abstreiflinie (P1) und Scheitellinie (P2).

4. Kolbenring (1) gemäß einem der vorstehenden Ansprüche, wobei die Lauffläche (2) in jeder axialen Querschnittsansicht glatt, ohne Kanten zwischen den Laufflächenbereichen Bo, Bu, Bm, ausgebildet ist.

5. Kolbenring (1) gemäß einem der vorstehenden Ansprüche, wobei die konkaven Abschnitte (Av) und die konvexen Abschnitte (Ax) des mittleren Laufflächenbereichs glatt, ohne Kanten zu bilden, ineinander übergehen.

6. Kolbenring (1) gemäß einem der vorstehenden Ansprüche, wobei der mittlere Laufflächenbereich (Bm) in Umlaufrichtung 3 - 30, bevorzugt 8 - 24, weiter bevorzugt 12 - 18, konkave Abschnitte (Av) aufweist.

7. Kolbenring (1) gemäß einem der vorstehenden Ansprüche, wobei sich jeder der konvexen Abschnitte (Ax) in Umlaufrichtung über einen Winkel von mindestens 5° erstreckt.

8. Kolbenring (1) gemäß einem der vorstehenden Ansprüche, wobei die an den Ringstoß angrenzenden Endbereiche der Lauffläche (2) einen konvexen Abschnitt (Ax) bilden.

9. Kolbenring (1) gemäß einem der vorstehenden Ansprüche, wobei die Abstreiflinie (P1) und die Scheitellinie (P2) einen in Umlaufrichtung im Wesentlichen konstanten Abstand von einer Kolbenringflanke (3) aufweisen.

10. Kolbenring (1) gemäß einem der vorstehenden Ansprüche, wobei der Abstand in radialer Richtung zwischen Abstreiflinie (P1) und Scheitellinie (P2) in Umlaufrichtung im Wesentlichen konstant ist.

11. Kolbenring (1) gemäß einem der vorstehenden Ansprüche, wobei die Abstreiflinie (P1), gemessen von der kurbelraumseitigen Flanke (3), in einer axialen Höhe von 45-70%, bevorzugt 50-60%, der axialen Gesamthöhe des Kolbenrings verläuft.

12. Kolbenring (1) gemäß einem der vorstehenden Ansprüche, wobei die Lauffläche (2) eine geschlossene Fläche bildet, wobei keine Öffnungen, die durch den Kolbenring (1) hindurch zur Kolbenringinnenseite verlaufen, vorgesehen sind.

## Claims

1. A piston ring (1), wherein the external running surface (2) is divided into areas that extend peripherally in the circumferential direction over different axial height ranges of the running surface (2), and in particular
an upper running surface region (Bo) on the combustion chamber side,
a lower running surface region (Bu) on the crankcase side, and
a middle running surface region (Bm) between the upper and the lower running surface regions (Bo, Bu);
wherein the boundary line between the upper and the middle running surface regions (Bo, Bm) forms a scraping line (P1), wherein the boundary line between the middle and the lower running surface regions (Bm, Bu) forms an apex line (P2);
wherein the upper and the lower running surface regions (Bo, Bu) in an axial cross-sectional view are convexly outwardly curved over their entire axial height;
**characterized in that** the scraping line (P1) extends farther radially outwardly than the apex line (P2),
and the middle running surface region (Bm) in the circumferential direction has alternating convex sections (Ax) that are convexly outwardly curved in an axial cross-sectional view, and concave sections (Av) that are at least partially concavely inwardly curved in an axial cross-sectional view.

2. The piston ring (1) according to Claim 1, wherein the apex line (P2) is situated farther radially outwardly than at least one farthest radially inward point of the concave sections (Av).

3. The piston ring (1) according to one of the preceding claims, wherein the radial distance (N) between the scraping line (P1) and the at least one farthest radially inward point of the concave sections (Av) is less than 5 times the radial distance between the scraping line (P1) and the apex line (P2).

4. The piston ring (1) according to one of the preceding claims, wherein the running surface (2) in any axial cross-sectional view has a smooth design without edges between the running surface regions (Bo, Bu, Bm).

5. The piston ring (1) according to one of the preceding claims, wherein the concave sections (Av) and the convex sections (Ax) of the middle running surface regions merge into one another smoothly without forming edges.

6. The piston ring (1) according to one of the preceding claims, wherein the middle running surface region (Bm) in the circumferential direction has 3-30, preferably 8-24, more preferably 12-18, concave sections (Av).

7. The piston ring (1) according to one of the preceding claims, wherein each of the convex sections (Ax) extends in the circumferential direction over an angle of at least 5°.

8. The piston ring (1) according to one of the preceding claims, wherein the end areas of the running surface (2) adjoining the ring joint form a convex section (Ax).

9. The piston ring (1) according to one of the preceding claims, wherein the distance of the scraping line (P1) and the apex line (P2) from a piston ring flank (3) is essentially constant in the circumferential direction.

10. The piston ring (1) according to one of the preceding claims, wherein the radial distance between the scraping line (P1) and the apex line (P2) is essentially constant in the circumferential direction.

11. The piston ring (1) according to one of the preceding claims, wherein the scraping line (P1), measured from the side flank (3) on the crankcase side, extends at an axial height of 45-70%, preferably 50-60%, of the overall axial height of the piston ring.

12. The piston ring (1) according to one of the preceding claims, wherein the running surface (2) forms a closed surface, with no openings that extend through the piston ring (1) to the inner side of the piston ring being provided.

## Revendications

1. Segment de piston (1), la surface d'excursion extérieure (2) étant divisée en zones qui s'étendent circulairement dans la direction périphérique sur différentes zones de hauteur axiales de la surface d'excursion (2), et en particulier
une zone de surface d'excursion supérieure (Bo) du côté de la chambre de combustion,
une zone de surface d'excursion inférieure (Bu) du côté de la chambre de vilebrequin, et
une zone de surface d'excursion médiane (Bm) située entre les zones de surface d'excursion supérieure et inférieure (Bo, Bu) ;
la ligne frontière entre les zones de surface d'excursion supérieure et moyenne (Bo, Bm) formant une ligne de raclage (P1),
la ligne frontière située entre les zones de surface d'excursion médiane et inférieure (Bm, Bu) formant une ligne de sommet (P2) ;
les zones de surface d'excursion supérieure et inférieure (Bo, Bu) étant incurvées, dans une vue en coupe axiale, de manière convexe vers l'extérieur sur toute leur hauteur axiale ;
**caractérisé en ce que** la ligne de raclage (P1) s'étend radialement plus vers l'extérieur que la ligne de sommet (P2), et **en ce que**
la zone de surface d'excursion médiane (Bm) comporte, alternativement dans la direction périphérique, des parties convexes (Ax) qui sont incurvées de manière convexe vers l'extérieur dans une vue en coupe axiale et des parties concaves (Av) qui sont incurvées de manière au moins partiellement concave vers l'intérieur dans une vue en coupe axiale.

2. Segment de piston (1) selon la revendication 1, la ligne de sommet (P2) étant située radialement plus vers l'extérieur qu'au moins un point radialement le plus à l'intérieur des parties concaves (Av).

3. Segment de piston (1) selon l'une des revendications précédentes, la distance radiale (N) entre la ligne de raclage (P1) et l'au moins un point radialement le plus à l'intérieur des parties concaves (Av) étant inférieure à 5 fois la distance radiale entre la ligne de raclage (P1) et la ligne de sommet (P2).

4. Segment de piston (1) selon l'une des revendications précédentes, la surface d'excursion (2) étant lisse dans toute vue en coupe axiale, sans arêtes entre les zones de surface d'excursion (Bo, Bu, Bm).

5. Segment de piston (1) selon l'une des revendications précédentes, les parties concaves (Av) et les parties convexes (Ax) de la zone de surface d'excursion médiane se fondent les unes dans les autres de manière lisse, sans former d'arêtes.

6. Segment de piston (1) selon l'une des revendications précédentes, la zone de surface d'excursion médiane (Bm) comporte dans la direction périphérique 3 à 30, de préférence 8 à 24, plus préférablement 12 à 18, parties concaves (Av).

7. Segment de piston (1) selon l'une des revendications précédentes, chacune des parties convexes (Ax) s'étend sur un angle d'au moins 5° dans la direction périphérique.

8. Segment de piston (1) selon l'une des revendications précédentes, les zones d'extrémité de la surface d'excursion (2), qui sont adjacentes au bord de segment, formant une partie convexe (Ax).

9. Segment de piston (1) selon l'une des revendications précédentes, la distance de la ligne de raclage (P1) et de la ligne de sommet (P2) par rapport à un flanc de segment de piston (3) est sensiblement constante dans la direction périphérique.

10. Segment de piston (1) selon l'une des revendications précédentes, la distance radiale entre la ligne de raclage (P1) et la ligne de sommet (P2) étant sensiblement constante dans la direction périphérique.

11. Segment de piston (1) selon l'une des revendications précédentes, la ligne de raclage (P1), mesurée à partir du flanc (3) du côté de la chambre de vilebrequin, s'étendant à une hauteur axiale de 45 à 70 %, de préférence de 50 % à 60 %, de la hauteur axiale totale du segment de piston.

12. Segment de piston (1) selon l'une des revendications précédentes, la surface d'excursion (2) formant une surface fermée, aucune ouverture ne traversant le segment de piston (1) en direction du côté intérieur du segment de piston.
